# EUROPÄISCHE PATENTANMELDUNG

(11) **EP 3 706 287 A1**
(43) Veröffentlichungstag der Anmeldung: **09.09.2020**
(21) Anmeldenummer: 19161321.5
(22) Anmeldetag: 07.03.2019
(51) Int. Cl.: H02K 1/02, H02K 1/14, H02K 15/02, H02K 1/04

(54) **BLECHPAKET EINES STATORS**

(71) Anmelder: Siemens Aktiengesellschaft, 80333 München (DE)
(72) Erfinder: Mikschy, Michael, 97616 Bad Neustadt (DE)

(57) **Zusammenfassung**

Die Erfindung betrifft ein Paket (1) eines Stators (11) einer dynamoelektrischen rotatorischen Maschine (10) mit einem Joch (9) und einem in das Joch (9) axial einsetzbaren Sternpaket (8), das Zähne (2) mit einem Zahnkopf (3) und einem radial nach außen weisenden Zahnschaft (5) aufweist, wobei das Joch (9) das Sternpaket (8) umfänglich umschließt, wobei zumindest das Joch (9) und/oder das Sternpaket (8) axial geschichtete Lamellen aufweisen, wobei das Sternpaket (8) axial betrachtet eine erste einstückige Schicht (22) umfänglich geschlossener Lamellen aufweist und eine zweite Schicht (23) von Einzelzähnen aufweist, wobei die Zähne (2) der ersten (22) und zweiten Schicht (23) jeweils einen Zahnkopf (3) und einen Zahnschaft (5) aufweisen, wobei diese unterschiedlichen Schichten (22,23) in einem axial vorgebbaren Wechsel angeordnet sind, wobei die einstückigen Schichten (22) als amagnetisches Material, wie z.B. Aluminium, amagnetischem Stahl oder GFK ausgeführt sind.

## Beschreibung

Die Erfindung betrifft ein Blechpaket eines Stators einer dynamoelektrischen rotatorischen Maschine, eine dynamoelektrische rotatorische Maschine mit einem derartigen Stator und ein Verfahren zur Herstellung eines Stators einer dynamoelektrischen rotatorischen Maschine.

Zur Magnetfeldführung dynamoelektrischer rotatorischer Maschinen sind Blechpakete vorgesehen, wobei in Nuten dieser Blechpakete elektrische Leiter angeordnet sind. Die Anordnung dieser elektrischen Leiter in den Nuten ist je nach Gestaltung der Zähne des Blechpakets aufwändig, da über die Nutschlitze, also den Abstand zwischen zwei benachbarten Zähnen die Leiter eingesetzt werden müssen.

Eine andere Möglichkeit die Leiter einzusetzen wird in der DE 198 42 948 A1 vorgestellt, wobei das Blechpaket des Stators in zwei koaxiale Abschnitte unterteilt wird, in ein sogenanntes Joch-Sternpaket wobei das Sternpaket mit elektrischen Leitern versehen wird und anschließend in das Jochpaket eingesetzt wird. Nachteilig dabei ist jedoch, dass das Sternpaket, insbesondere wenn die Zähne voneinander benachbart sind und damit Nutschlitze aufweisen, mechanisch nicht besonders stabil ist.

In der DE 198 42 948 A1 werden deshalb in vorgegebenen axialen Abständen Bleche vorgesehen, die in Umfangsrichtung geschlossen ausgeführt sind, d.h. die Nutschlitze sind durch Stege überbrückt. Dies führt aber zu Streuverlusten innerhalb des Blechpakets des Stators, so dass bei kleineren Maschinen bis zu 20% des magnetischen Flusses als Streufluss "verloren" gehen und somit nicht zur Drehmomenterzeugung zur Verfügung steht.

Ausgehend davon liegt der Erfindung die Aufgabe zugrunde, ein Blechpaket eines Stators bereitzustellen, dass die oben genannten Nachteile vermeidet.

Die Lösung der gestellten Aufgabe gelingt durch ein Paket eines Stators einer dynamoelektrischen rotatorischen Maschine mit einem Joch und einem in das Joch axial einsetzbaren Sternpaket, das Zähne mit einem Zahnkopf und einem radial nach außen weisenden Zahnschaft aufweist, wobei das Joch das Sternpaket umfänglich umschließt, wobei zumindest das Joch und/oder das Sternpaket axial geschichtete Lamellen aufweisen, wobei das Sternpaket axial betrachtet eine erste einstückige Schicht umfänglich geschlossener Lamellen aufweist und eine zweite Schicht von Einzelzähnen aufweist, wobei die Zähne der ersten und zweiten Schicht jeweils einen Zahnkopf und einen Zahnschaft aufweisen, wobei diese unterschiedlichen Schichten in einem axial vorgebbaren Wechsel angeordnet sind, wobei die einstückigen Schichten als amagnetisches Material, wie z.B. Aluminium, amagnetischem Stahl oder GFK ausgeführt sind.

Durch die erfindungsgemäße Gestaltung wird nunmehr ein Paket, insbesondere ein Blechpaket eines Stators bereitgestellt, dass eine ausreichende mechanische Stabilität aufweist und gleichzeitig keine oder äußerst geringe magnetische Streuverluste aufgrund der überbrückten Zahnköpfe darstellt. Diese einzelnen einstückigen umfänglich durchgehenden Lamellen bzw. ersten Schichten dienen der Stabilität des Blechpakets. Diese ersten Schichten können in vorgebbaren axialen Abständen innerhalb des Blechpakets angeordnet sein.

Durch den reduzierten Streufluss des amagnetischen Materials dieser ersten Schichten, ist insgesamt weniger Magnetmaterial bei einer vergleichbaren Maschine erforderlich. Des Weiteren reduziert sich die Induktivität der Maschine, was zu einem erhöhten Drehmoment an der Spannungsgrenze führt.

Diese ersten einstückigen Schichten sind insbesondere an den Zahnköpfen miteinander durch Stege mechanisch verbunden. Die axiale Dicke der Stege entspricht im Wesentlichen der Dicke der ersten Schicht. Die Stege können dabei auch in axialer Richtung mit geringerer Dicke als die ersten Schichten ausgeführt sein. Ebenso ist es möglich, dass diese Stege in zumindest einer axialen Richtung in den benachbarten Nutschlitz der zweiten Schichten ragen.

Zwischen diesen ersten Schichten sind zweite Schichten vorgesehen, die pro Schicht in Umfangsrichtung betrachtet aus Einzelzähnen aus magnetisch gut leitendem Material, wie z.B. Dynamoblech bestehen.

Das gesamte Blechpaket wird durch Stanzpaketierverfahren oder durch Stanzen oder Klebevorgänge ausgebildet.

Die amagnetischen ersten Schichten innerhalb des Blechpakets haben keine magnetischen Rückwirkungen auf den magnetischen Fluss im Betrieb der dynamoelektrischen Maschine. Dadurch können die Stege vergleichsweise dick ausgeführt werden, was die Stabilität des gesamten Blechpakets des Stators erhöht.

Eine derartige dynamoelektrische rotatorische Maschine ist damit sehr kompakt ausgebildet und weist eine hohe Effizienz auf, da Streuverluste vermieden werden. Demzufolge können auch die Umrichter, die zur Versorgung dieser dynamoelektrischen Maschine vorgesehen sind, dementsprechend geringer dimensioniert sein.

Die Lösung der gestellten Aufgabe gelingt ebenso durch ein Verfahren zur Herstellung eines Stators einer dynamoelektrischen rotatorischen Maschine durch folgende Schritte:
- Bereitstellen eines Pakets nach einem der Ansprüche 1 bis 6, insbesondere ein paketiertes Sternpaket, das radial von außen mit Zahnspulen bestückt wird, indem pro Nut eine Spulenseite oder zwei Spulenseiten unterschiedlicher Zahnspulen, insbesondere radial von außen eingesetzt werden,
- axiales Einsetzen des mit Zahnspulen bestückten Sternpakets in ein Joch.

Durch das erfindungsgemäße Verfahren kann nunmehr die dynamoelektrische Maschine bei reduzierten Streuverlusten kompakter aufgebaut werden. Ebenso wird eine automatisierte Fertigung insbesondere der Statorherstellung, wie Paketherstellung, Positionierung der Wicklung mittels Zahnspulen ermöglicht. Dies bildet einen Schritt zu einer nahezu vollautomatisierten Fertigung einer kompletten dynamoelektrischen Maschine von Stator und Rotor.

Idealerweise werden dabei die Bleche mit Einzelzähnen (zweite Schichten) und die Bleche aus amagnetischem Material (erste Schichten) mit dem gleichen Stanzwerkzeug bearbeitet.

Bei diesem Herstellungsvorgang werden die somit bereitgestellten Bleche gleichzeitig geschichtet und stanzpaketiert, so dass fertige Blechpakete aus dem Stanzwerkzeug entnommen werden können. Dem Stanzwerkzeug werden also zwei unterschiedliche Materialstreifen aus übereinanderliegenden oder unterschiedlichen Richtungen zugeführt, wobei der Vorschub derart gestaltet wird, dass eine axiale Abfolge dieser ersten und zweiten Schichten vorliegt.

Beispielsweise folgt so nach fünf weichmagnetischen, also zweiten Schichten, eine amagnetische Schicht usw. Dieses hergestellte lamellierte Sternpaket wird dann axial in ein Joch eingesetzt. Das Joch ist aus dem gleichen Material wie die zweiten Schichten. Das Joch kann ebenso aus axial geschichteten Blechen ausgeführt sein, um so ein Jochblechpaket zu bilden. Das Jochpaket kann aber ebenso aus einem anderen Material und/oder andere axiale Blechdicken aufweisen. Ebenso ist es möglich das Jochpaket als einstückiges gesintertes Teil vorzusehen.

Die jeweiligen Blechpakete von Joch- und/oder Sternpaket werden durch Stanzpaketierverfahren und/oder durch Stanzen und/oder Klebevorgänge hergestellt.

Dabei wird jeweils - unabhängig davon wie nun das Joch ausgeführt ist - das Sternpaket mit bestückten Zahnspulen axial in das Joch eingesetzt. Um möglichst einen geringen magnetischen Widerstand an den Übergängen vom Sternpaket auf das Joch zu erhalten, ist bei der konstruktiven Gestaltung darauf zu achten, dass die Spalte möglichst gering sind.

Die Erfindung sowie weitere vorteilhafte Ausgestaltungen der Erfindung werden anhand der Ausführungsbeispiele näher erläutert. Darin zeigen;
- FIG 1: eine zweite Schicht eines Sternpakets,
- FIG 2: eine erste Schicht eines Sternpakets,
- FIG 3,4: perspektivische Teilausschnitte des Sternpakets,
- FIG 5: ein Joch-Sternpaket,
- FIG 6: eine dynamoelektrische rotatorische Maschine.

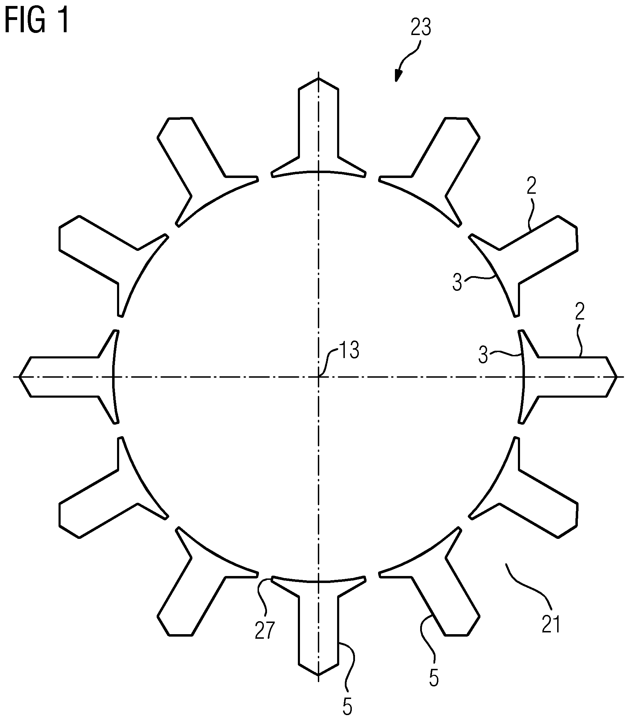

FIG 1 zeigt in einem Querschnitt eine zweite Schicht 23, die aus einzelnen Zähnen 2, die einen Zahnkopf 3 und einen Zahnschaft 5 aufweisen. Die Zahnköpfe 3 sind durch Nutschlitze voneinander beabstandet.

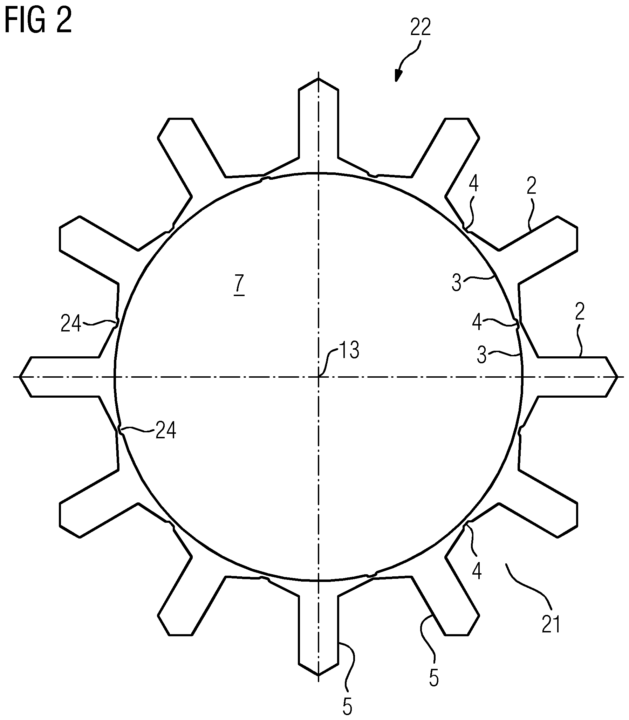

FIG 2 zeigt eine erste Schicht 22, die aus am Zahnkopf 3 zusammenhängenden Zähnen 2 besteht. Diese erste Schicht 22 ist aus amagnetischem Material. Diese erste Schicht 22 weist somit eine Verbindung der Zahnköpfe 3 durch Stege 4 auf, die ebenfalls aus amagnetischem Material sind, so dass keine Streuverluste durch den konstruktiven Aufbau des Blechpakets auftreten. Die Stege 4 weisen eine radiale Stärke auf, die im Wesentlichen der radialen Stärke der Zahnköpfe 3 am Nutschlitz entspricht. Sie können Ausnehmungen 24 aufweisen, die die radiale Höhe der Stege 4 reduzieren. Diese Ausnehmungen 24 sind beispielhaft FIG 2 zu entnehmen und können entweder einer Statorbohrung 7 und/oder einer Nut 21 zugewandt sein. Je nach Ausführung sind diese Ausnehmungen 24 als Montagehilfe und/oder Justierung während des Fertigungsverfahrens hilfreich.

Diese ersten einstückigen Schichten 22, insbesondere aus einem amagnetischen Material sind an den Zahnköpfen miteinander durch Stege 4 mechanisch verbunden. Die axiale Dicke der Stege 4 entspricht im Wesentlichen der Dicke der ersten Schicht 22. Die Stege 4 können dabei auch in axialer Richtung mit geringerer Dicke als die ersten Schichten 22 ausgeführt sein. Ebenso ist es möglich, dass diese Stege 4 in zumindest einer axialen Richtung in den benachbarten Nutschlitz 27 der zweiten Schichten 23 ragen.

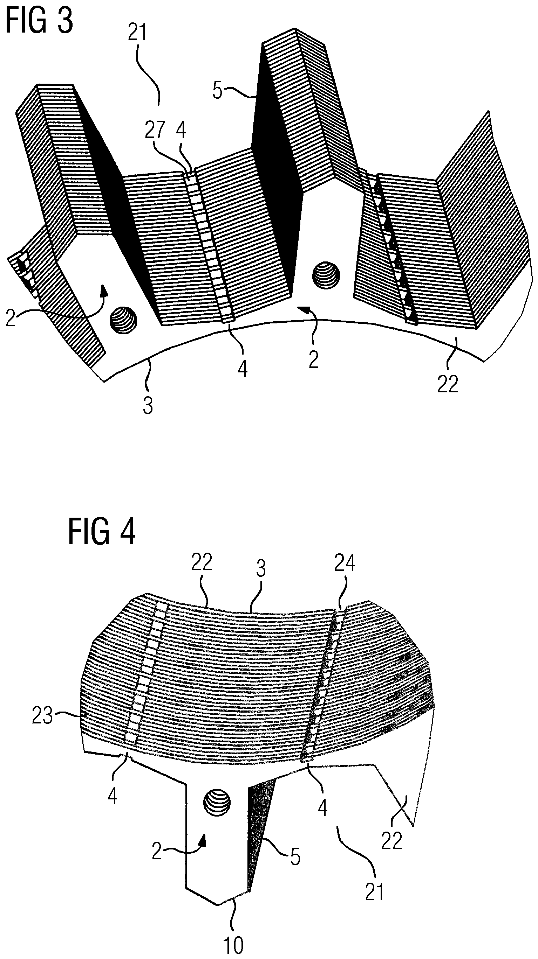

FIG 3 und 4 zeigen teilperspektivische Ausschnitte des Sternpakets 8, bei der die axiale Abfolge von weichmagnetischen Blechen ohne Verbindung der Zahnköpfe 3 (zweite Schichten 23) und der einstückigen amagnetischen Bleche (erste Schichten 22) gezeigt ist. Die Zahnschäfte 5 sind an ihrem radialen Ende in diesem Fall dachförmig ausgestaltet, so dass sie beim axialen Einsetzen in ein Joch 9 einen möglichst geringen magnetischen Widerstand aufweisen.

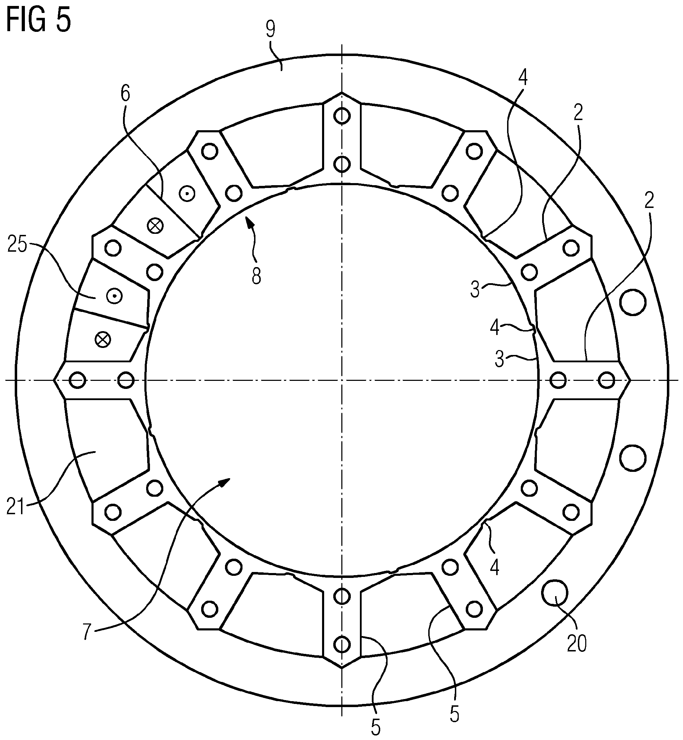

FIG 5 zeigt das Sternpakets 8 in dem Joch 9, wobei in Nuten 21, also zwischen den Zahnschäften 5 nicht näher dargestellte Spulen, insbesondere Zahnspulen 25 vorzusehen sind. Das Joch 9 umschließt das Sternpaket 8 in Umfangsrichtung. Im Joch 9 sind optional Kühlkanäle 20 vorgesehen, die beispielsweise für eine Flüssigkeits- oder Luftkühlung geeignet sind.

Bei zwei Spulenseiten unterschiedlicher Zahnspulen 25 in einer Nut 21 sind dabei Phasentrenner 6 vorzusehen, um die erforderliche Spannungsfestigkeit und/oder Kriechstrecken einzuhalten.

Das Paket 1 des Stators 11 weist an seinen axialen Stirnseiten aus Stabilitätsgründen einstückige Schichten 22 auf.

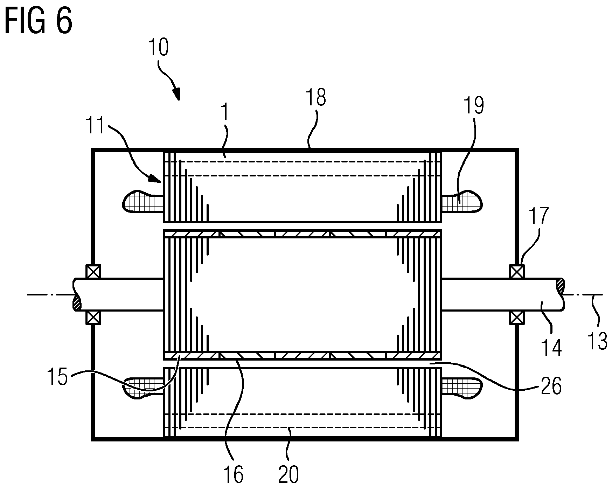

FIG 6 zeigt in einem Längsschnitt eine prinzipiell dynamoelektrische Maschine 10, wobei ein Rotor 12 drehfest mit einer Welle 14 verbunden ist und über Lager 17 drehbar in einem Gehäuse 18 gehalten wird, das auch den Stator 11 aufnimmt.

Im Betrieb der dynamoelektrischen Maschine 10 wird durch elektromagnetische Wechselwirkung eines bestromten Wicklungssystems des Stators 11 mit dem Rotor 12 über den Luftspalt 26 hinweg ein Drehmoment an der Welle 14 erzeugt, was zu einer Rotation der Welle 14 um die Achse 13 führt.

Der erfinderische Gedanke kann selbstverständlich auch bei gehäuselosen dynamoelektrischen Maschinen 10 umgesetzt werden. Dabei werden dann die Lagerschilde axial am Stator 11, bzw. am Blechpaket 1 des Stators 11 befestigt, insbesondere angeschraubt.

Der Rotor 12 weist in diesem Fall Permanentmagnete 15 auf, die durch eine Bandage 16 und/oder eine Klebung am Rotor 12 gehalten sind. Ebenso ist vorstellbar die Permanentmagnete 15 innerhalb des Blechpakets des Rotors 12 als "vergrabene Magente" anzuordnen.

Alternativ kann zur Fixierung eines Sternpakets ohne erste Schichten in die Statorbohrung 7 eine Hülse aus glasfaserverstärktem Kunstststoff (GFK) oder carbonfaserverstärktem Kunststoff (CFK) vorgesehen werden, die zur Stabilisierung dient und ebenfalls keine Streuverluste aufweist. Jedoch wird dann der Luftspalt 26 zwischen Stator 11 und Rotor 12 größer, was die Effizienz der dynamoelektrischen Maschine 10 reduziert.

Derartige dynamoelektrische Maschinen 10 werden vor allem im Werkzeugmaschinenbau als Haupt- oder Hilfsantriebe eingesetzt. Andere Anwendungen dieser dynamoelektrischen Maschinen 10 in der Nahrungs- und Genussmittelindustrie, aber auch Anwendungen in der elektrischen Mobilität im Schienen- oder Straßenverkehr sind ebenfalls möglich.

## Patentansprüche

1. Paket (1) eines Stators (11) einer dynamoelektrischen rotatorischen Maschine (10) mit einem Joch (9) und einem in das Joch (9) axial einsetzbaren Sternpaket (8), das Zähne (2) mit einem Zahnkopf (3) und einem radial nach außen weisenden Zahnschaft (5) aufweist, wobei das Joch (9) das Sternpaket (8) umfänglich umschließt, wobei zumindest das Joch (9) und/oder das Sternpaket (8) axial geschichtete Lamellen aufweisen, wobei das Sternpaket (8) axial betrachtet eine erste einstückige Schicht (22) umfänglich geschlossener Lamellen aufweist und eine zweite Schicht (23) von Einzelzähnen aufweist, wobei die Zähne (2) der ersten (22) und zweiten Schicht (23) jeweils einen Zahnkopf (3) und einen Zahnschaft (5) aufweisen, wobei diese unterschiedlichen Schichten (22,23) in einem axial vorgebbaren Wechsel angeordnet sind, wobei die einstückigen Schichten (22) als amagnetisches Material, wie z.B. Aluminium, amagnetischem Stahl oder GFK ausgeführt sind.

2. Paket (1) nach Anspruch 1,
**dadurch gekennzeichnet , dass** die einstückige Schicht (22) im Wesentlichen dem Querschnitt des Sternpakets (8) entspricht.

3. Paket (1) nach einem der vorhergehenden Ansprüche,
**dadurch gekennzeichnet, dass** die Lamellen der ersten (22) und/oder zweiten Schichten (23) stanzpaketiert und/oder verklebt sind.

4. Paket (1) nach einem der vorhergehenden Ansprüche,
**dadurch gekennzeichnet, dass** die Zahnköpfe (3) der ersten Schicht (22) mittels Stegen (4) verbunden sind.

5. Paket (1) nach Anspruch 4,
**dadurch gekennzeichnet, dass** die axiale Dicke der Stege (4) größer oder kleiner ist als die axiale Dicke der ersten Schicht (22).

6. Dynamoelektrische Maschine (10) mit einem Paket (1) nach einem der vorhergehenden Ansprüche,
**dadurch gekennzeichnet, dass** in Nuten (21) des Pakets (1) Zahnspulen (25) angeordnet sind.

7. Verfahren zur Herstellung eines Stators (11) einer dynamoelektrischen rotatorischen Maschine (10) durch folgende Schritte:
- Bereitstellen eines Pakets (1) nach einem der Ansprüche 1 bis 5, insbesondere ein paketiertes Sternpaket (8), das radial von außen mit Zahnspulen (25) bestückt wird, indem pro Nut (21) eine Spulenseite oder zwei Spulenseiten unterschiedlicher Zahnspulen (25), insbesondere radial von außen eingesetzt werden,
- axiales Einsetzen des mit Zahnspulen (25) bestückten Sternpakets (8) in ein Joch (9).

8. Verfahren nach Anspruch 7,
**dadurch gekennzeichnet, dass** das Joch (9) in ein Gehäuse (18) eingesetzt wird.
